# EUROPÄISCHE PATENTSCHRIFT

(11) **EP 2 686 187 B1**
(45) Veröffentlichungstag und Bekanntmachung des Hinweises auf die Patenterteilung: **22.03.2017**
(21) Anmeldenummer: 12702804.1
(22) Anmeldetag: 01.02.2012
(51) Int. Cl.: B60K 6/48, B60K 6/547, B60K 6/387, F16H 3/00, B60K 6/54

(54) **SCHALTGETRIEBE EINES HYBRIDANTRIEBS FÜR EIN KRAFTFAHRZEUG**
MANUAL TRANSMISSION OF A HYBRID DRIVE FOR A MOTOR VEHICLE
BOÎTE DE VITESSES MANUELLE D'UN ENTRAÎNEMENT HYBRIDE POUR VÉHICULE À MOTEUR

(30) Priorität: 15.03.2011 DE 102011005561
(43) Veröffentlichungstag der Anmeldung: 22.01.2014
(60) Teilanmeldung: 14166285.8
(73) Patentinhaber: ZF Friedrichshafen AG, 88046 Friedrichshafen (DE)
(72) Erfinder: KALTENBACH, Johannes, 88048 Friedrichshafen (DE)
(86) Internationale Anmeldenummer: PCT/EP2012/051629
(87) Internationale Veröffentlichungsnummer: WO 2012/123169

(56) Entgegenhaltungen:
- EP-A1- 1 610 038
- DE-A1- 19 960 621
- DE-A1-102006 036 758
- DE-A1-102007 042 949
- FR-A1- 2 811 395
- JP-A- 2010 203 605
- US-A1- 2006 130 601
- US-A1- 2010 120 580
- TENBERGE P: "Double-Clutch Transmission - Power-Shiftable Winding Transmission", VDI BERICHTE, DUESSELDORF, DE, Bd. 1665, 13. März 2002 (2002-03-13), Seiten 1033-1050, XP009094673, ISSN: 0083-5560

## Beschreibung

Die Erfindung betrifft ein Schaltgetriebe eines Hybridantriebs für ein Kraftfahrzeug, mit zwei Eingangswellen und einer gemeinsamen Ausgangswelle, wobei die erste Eingangswelle mit der Triebwelle eines Verbrennungsmotors verbindbar und über eine erste Gruppe selektiv schaltbarer Gangradsätze mit der Ausgangswelle in Triebverbindung bringbar ist, wobei die zweite Eingangswelle mit dem Rotor einer als Motor und als Generator betreibbaren Elektromaschine in Triebverbindung steht und über eine zweite Gruppe selektiv schaltbarer Gangradsätze mit der Ausgangswelle in Triebverbindung bringbar ist, und wobei beide Eingangswellen über eine schaltbare Koppelvorrichtung miteinander in Triebverbindung bringbar sind.

Ein derartiges Schaltgetriebe weist einen verbrennungsmotorischen Kraftübertragungszweig und einen elektromotorischen Kraftübertragungszweig auf, die an der Ausgangswelle zusammengeführt sind. Der verbrennungsmotorische Kraftübertragungszweig umfasst die erste Eingangswelle, die Gangradsätze der ersten Gruppe sowie die Ausgangswelle und ermöglicht die Übertragung eines Drehmomentes zwischen dem Verbrennungsmotor und den mit der Ausgangswelle in Triebverbindung stehenden Antriebsrädern des Kraftfahrzeugs. Der elektromotorische Kraftübertragungszweig umfasst die zweite Eingangswelle, die Gangradsätze der zweiten Gruppe sowie die Ausgangswelle und ermöglicht die Übertragung eines Drehmomentes zwischen der Elektromaschine und den Antriebsrädern des Kraftfahrzeugs. Bei offener Koppelvorrichtung ist somit über einen geschalteten Gangradsatz der ersten Gruppe ein rein verbrennungsmotorischer Fahrbetrieb, über einen geschalteten Gangradsatz der zweiten Gruppe ein rein elektromotorischer Fahrbetrieb, sowie über jeweils einen geschalteten Gangradsatz der ersten und zweiten Gruppe ein Kombinationsfahrbetrieb beider Aggregate (Verbrennungsmotor und Elektromaschine) mit einem motorischen oder generatorischen Betrieb der Elektromaschine und mit fester Übersetzung möglich.

Durch das Schließen der Koppelvorrichtung kann der Verbrennungsmotor bei stehendem Kraftfahrzeug mittels der Elektromaschine gestartet werden. Zudem werden durch das Schließen der Koppelvorrichtung die Gangradsätze der zweiten Gruppe für den verbrennungsmotorischen Fahrbetrieb und die Gangradsätze der ersten Gruppe für den elektromotorischen Fahrbetrieb verfügbar gemacht. Bei entsprechender Übersetzung und Zuordnung der Gangradsätze werden somit insgesamt weniger Gangradsätze benötigt, und das Schaltgetriebe kann entsprechend einfacher sowie kompakter ausgeführt werden.

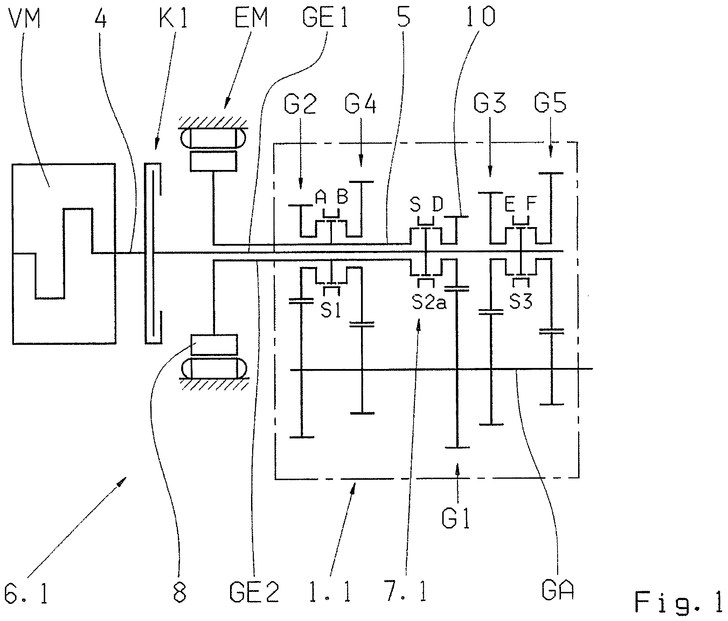

In der DE 199 60 621 B4 ist ein derartiges Schaltgetriebe in drei Ausführungsvarianten beschrieben. In allen Ausführungsformen weist der verbrennungsmotorische Kraftübertragungszweig eine erste Vorgelegewelle auf, die eingangsseitig über eine Eingangskonstante, eine erste Eingangswelle und eine Reibungskupplung mit der Triebwelle eines Verbrennungsmotors sowie ausgangsseitig über eine erste Gruppe selektiv schaltbarer Gangradsätze mit einer Ausgangswelle in Triebverbindung bringbar ist. In der ersten Ausführungsform nach der dortigen Fig. 1 ist eine zweite Eingangswelle als eine zweite Vorgelegewelle ausgebildet, die drehfest mit dem Rotor einer Elektromaschine verbunden und über eine zweite Gruppe selektiv schaltbarer Gangradsätze mit der Ausgangswelle in Triebverbindung bringbar ist. Die Koppelvorrichtung besteht in diesem Fall aus einer zwischen der ersten Eingangswelle und der zweiten Vorgelegewelle angeordneten Triebstufe sowie einer schaltbaren Kupplung, die zwischen dem vorgelegeseitigen Triebrad der Triebstufe und der zweiten Vorgelegewelle angeordnet ist.

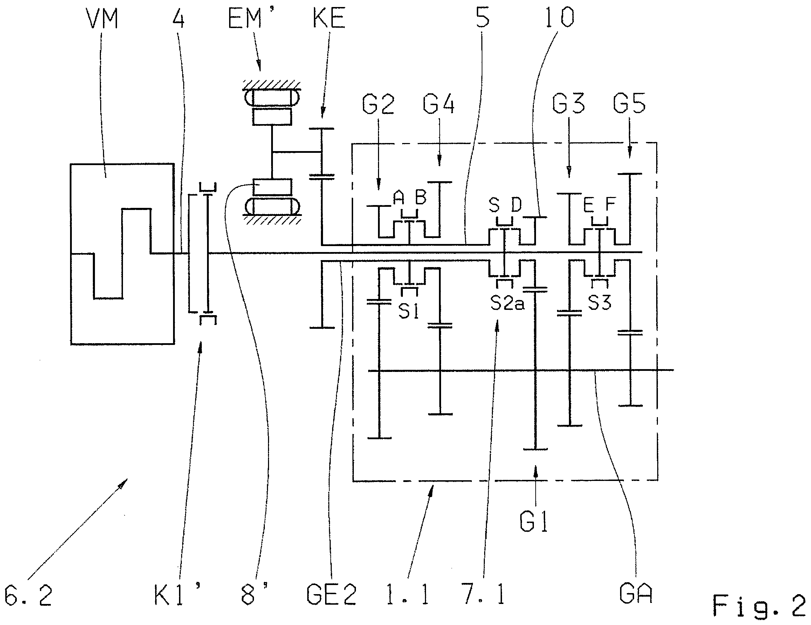

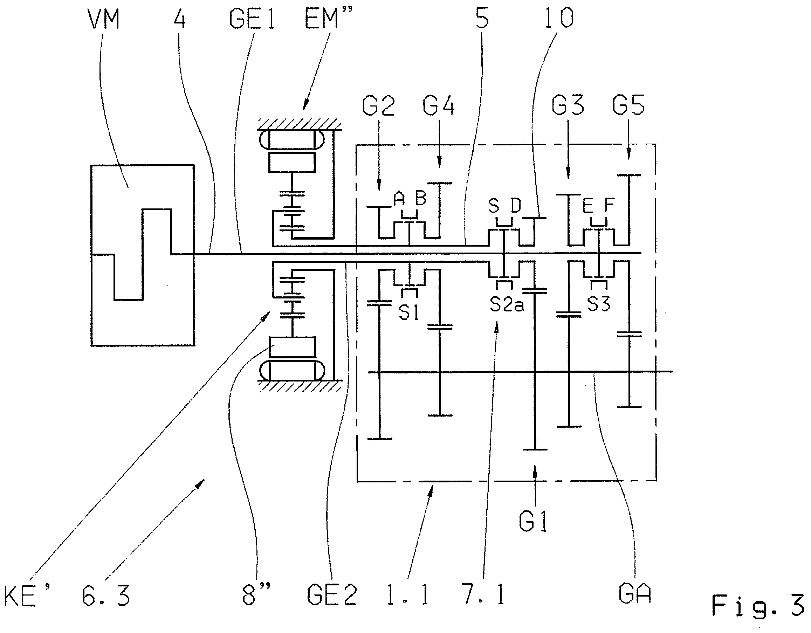

In der zweiten und dritten Ausführungsform nach den dortigen Figuren 2 und 3 ist die zweite Eingangswelle als eine hohle Rotorwelle ausgebildet, die koaxial über der ersten Eingangswelle angeordnet und drehfest mit dem Rotor einer koaxial über der ersten Eingangswelle angeordneten Elektromaschine verbunden ist. Die Rotorwelle steht über eine zweite Eingangskonstante mit der zweiten Vorgelegewelle in Triebverbindung, die über die zweite Gruppe selektiv schaltbarer Gangradsätze mit der Ausgangswelle in Triebverbindung bringbar ist. Die Koppelvorrichtung besteht in diesem Fall aus einer schaltbaren Kupplung, die zwischen der ersten Eingangswelle und der Rotorwelle angeordnet ist.

Bei einem weiteren derartigen Schaltgetriebe nach der WO 2008/ 138 387 A1 sind beide Eingangswellen als Vorgelegewellen ausgebildet. Die erste Eingangs- bzw. Vorgelegewelle des verbrennungsmotorischen Kraftübertragungszweiges ist eingangsseitig über eine steuerbare Trennkupplung mit der Triebwelle eines Verbrennungsmotors verbindbar und ausgangsseitig über eine erste Gruppe selektiv schaltbarer Gangradsätze mit einer Ausgangswelle in Triebverbindung bringbar. Die zweite Eingangs- bzw. Vorgelegewelle des elektromotorischen Kraftübertragungszweiges ist eingangsseitig drehfest mit dem Rotor einer Elektromaschine verbunden und ausgangsseitig über eine zweite Gruppe selektiv schaltbarer Gangradsätze mit der Ausgangswelle in Triebverbindung bringbar. Die Gangradsätze beider Gruppen sind in gemeinsamen Radialebenen angeordnet und nutzen jeweils ein gemeinsames, auf der Ausgangswelle angeordnetes Abtriebsrad. Die Koppelvorrichtung ist in diesem Fall dadurch gebildet, dass die Losräder und die zugeordneten, in einem Schaltpaket zusammengefassten Gangkupplungen von zwei axial benachbarten Gangradsätzen der zweiten Gruppe an der Ausgangswelle angeordnet sind, wodurch die Kopplung beider Eingangswellen unabhängig von der Schaltung eines der betreffenden Gangradsätze möglich ist.

Aus der FR 2811395 A1 ist ein Schaltgetriebe eines Hybridantriebs für ein Kraftfahrzeug bekannt, welcher zwei koaxial verlaufende Eingangswellen und eine gemeinsame Ausgangswelle aufweist, wobei die erste dieser Eingangswellen mit einem Verbrennungsmotor oder einem Elektromotor in Verbindung gebracht werden kann und über eine erste Gruppe selektiv schaltbarer Gangradsätze mit der Ausgangswelle in Triebverbindung gebracht werden kann. Die zweite Eingangswelle ist als Hohlwelle ausgeformt, ist mit einer Elektromaschine verbunden und kann über eine zweite Gruppe selektiv schaltbarer Gangradsätze mit der Ausgangswelle in Triebverbindung gebracht werden. Diese Elektromaschine ist sowohl als Elektromotor als auch als Generator betreibbar. Beide Eingangswellen können über eine Koppelvorrichtung miteinander in Triebverbindung gebracht werden. Das beschriebene Schaltgetriebe ist aus einem Doppelkupplungsgetriebe mit zwei koaxial verlaufenden Eingangswellen abgeleitet. Die Koppelvorrichtung umfasst eine schaltbare Kupplung, die der ersten Eingangswelle zugeordnet und axial benachbart zu dem getriebeseitigen Ende der Ausgangswelle angeordnet.

Die bekannten Schaltgetriebe sind speziell für den Einsatz in einem Hybridantrieb eines Kraftfahrzeugs ausgelegt und somit vergleichsweise aufwendig sowie teuer herstellbar. Der Markterfolg von hybridangetriebenen Kraftfahrzeugen hängt aber wesentlich von günstigen Herstellungskosten der Baugruppen des Hybridantriebsstrangs, insbesondere auch des Schaltgetriebes ab.

Der vorliegenden Erfindung liegt daher die Aufgabe zugrunde, ein Schaltgetriebe eines Hybridantriebs der eingangs genannten Art vorzuschlagen, das ohne wesentliche Funktionseinschränkungen besonders kostengünstig herstellbar ist.

Eine erste Lösung dieser Aufgabe besteht darin, dass ein Schaltgetriebe eines Hybridantriebs für ein Kraftfahrzeug vorgeschlagen wird, umfassend zwei Eingangswellen und eine gemeinsame Ausgangswelle, wobei die erste Eingangswelle mit der Triebwelle eines Verbrennungsmotors verbindbar und über eine erste Gruppe selektiv schaltbarer Gangradsätze mit der Ausgangswelle in Triebverbindung bringbar ist, wobei die zweite Eingangswelle mit dem Rotor einer als Motor und als Generator betreibbaren Elektromaschine in Triebverbindung steht und über eine zweite Gruppe selektiv schaltbarer Gangradsätze mit der Ausgangswelle in Triebverbindung bringbar ist, wobei beide Eingangswellen über eine schaltbare Koppelvorrichtung miteinander in Triebverbindung bringbar sind, und wobei die erste Eingangswelle zentral angeordnet ist, die zweite Eingangswelle eine Hohlwelle ausgebildet und koaxial über der ersten Eingangswelle angeordnet ist. Hierbei umfasst die Koppelvorrichtung eine Schaltkupplung zur unmittelbaren Kopplung der ersten Eingangswelle mit dem getriebeseitigen Ende der zweiten Eingangswelle (GE2), wobei die Schaltkupplung der Koppelvorrichtung mit der Gangkupplung des Gangradsatzes des ersten Vorwärtsgangs in einem gemeinsamen Schaltpaket zusammengefasst ist, über das die erste Eingangswelle in einer ersten Schaltstellung drehfest mit der zweiten Eingangswelle gekoppelt ist, in einer Neutralstellung ungekoppelt ist, und in einer zweiten Schaltstellung drehfest mit dem Losrad des Gangradsatzes des ersten Vorwärtsgangs gekoppelt ist.

Vorteilhafte Ausgestaltungen und Weiterbildungen dieses Schaltgetriebes sind Gegenstand der Unteransprüche 2 bis 8.

Die Erfindung geht demnach von einem an sich bekannten Schaltgetriebe eines Hybridantriebs für ein Kraftfahrzeug aus, das zwei Eingangswellen GE1, GE2 und eine gemeinsame Ausgangswelle GA aufweist. Bei diesem Schaltgetriebe ist die erste Eingangswelle GE1 mit der Triebwelle eines Verbrennungsmotors VM verbindbar und über eine erste Gruppe selektiv schaltbarer Gangradsätze (G 1, G3, G5; G2, G4) mit der Ausgangswelle GA in Triebverbindung bringbar. Die zweite Eingangswelle GE2 steht mit dem Rotor einer als Motor und als Generator betreibbaren Elektromaschine EM in Triebverbindung und ist über eine zweite Gruppe selektiv schaltbarer Gangradsätze (G2, G4; G1, G3, G5) mit der Ausgangswelle GA in Triebverbindung bringbar. Beide Eingangswellen GE1, GE2 sind über eine schaltbare Koppelvorrichtung miteinander in Triebverbindung bringbar.

Zur kostengünstigen Herstellung eines derartigen Schaltgetriebes ist gemäß der Erfindung vorgesehen, dass dieses aus einem Doppelkupplungsgetriebe mit zwei koaxialen Eingangswellen GE1, GE2 der vorgenannten Anordnung abgeleitet ist. Dabei umfasst die Koppelvorrichtung eine schaltbare Kupplung, die anstelle desjenigen Gangradsatzes und seiner zugeordneten Gangkupplung vorgesehen ist, der in dem zu Grunde liegenden Doppelkupplungsgetriebe der ersten Eingangswelle GE1 zugeordnet und axial benachbart zu dem getriebeseitigen Ende der zweiten Eingangswelle GE2 angeordnet ist. Dies bedeutet, dass der betreffende, in dem zu Grunde liegenden Doppelkupplungsgetriebe vorhandene Gangradsatz und die diesem zugeordnete Gangkupplung in dem Schaltgetriebe gemäß der Erfindung weggelassen und bauraumneutral durch die Schaltkupplung der Koppelvorrichtung zur Verbindung der beiden Eingangswellen GE1, GE2 ersetzt werden. Hierdurch ist ein Schaltgetriebe eines Hybridantriebs geschaffen, das weitgehend identisch mit dem zugrunde liegenden Doppelkupplungsgetriebe ist, d.h. eine hohe Zahl von Gleichteilen mit diesem aufweist, und daher, z.B. in einer gemeinsamen Produktionslinie mit dem Doppelkupplungsgetriebe, kostengünstig herstellbar ist.

Damit der gegenüber dem zugrunde liegenden Doppelkupplungsgetriebe weggefallene Gangradsatz nicht zu Funktionseinschränkungen des Schaltgetriebes bzw. des betreffenden Hybridantriebs führt, sollte der betreffende, in dem zugrunde liegenden Doppelkupplungsgetriebe axial benachbart zu dem getriebeseitigen Ende der zweiten Eingangswelle GE2 angeordnete Gangradsatz bevorzugt als ein Umkehr-Gangradsatz R ausgebildet und dem Rückwärtsgang zugeordnet sein. Auf den Gangradsatz des Rückwärtsgangs kann in dem Schaltgetriebe des Hybridantriebs problemlos verzichtet werden, da ein Rückwärts-Anfahren oder Rückwärts-Rangieren über einen Gangradsatz eines Vorwärtsgangs in Verbindung mit einer Drehrichtungsumkehr mittels der Elektromaschine möglich ist. Falls diese geeignete Anordnung des Umkehr-Gangradsatzes R in dem zu Grunde liegenden Doppelkupplungsgetriebe nicht gegeben ist, kann diese gegebenenfalls durch eine entsprechende Änderung der axialen Anordnung der der ersten Eingangswelle zugeordneten Gangradsätze geschaffen werden, sofern die räumlichen Gegebenheiten dies erlauben.

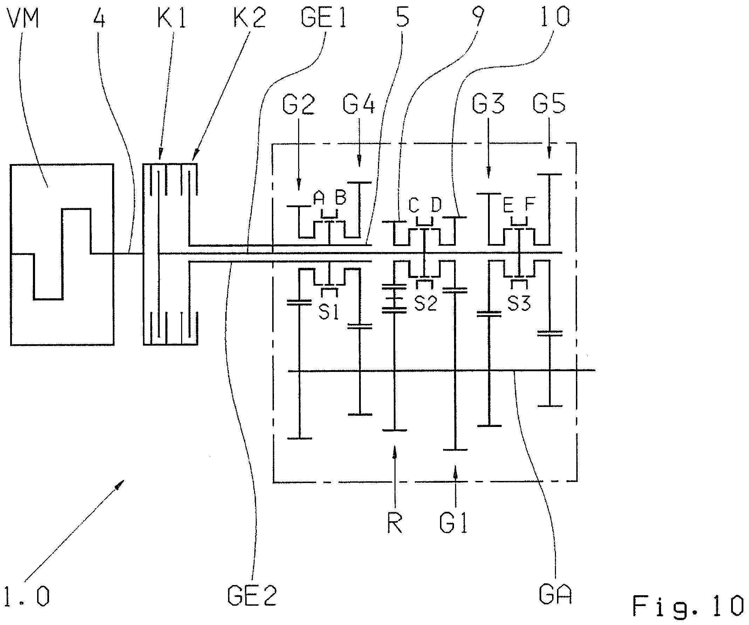

Wenn bei dem zugrunde liegenden Doppelkupplungsgetriebe (entsprechend Fig. 10) die Gangradsätze (G1 - G5, R) jeweils unmittelbar zwischen einer der beiden Eingangswellen GE1, GE2 und der Ausgangswelle GA angeordnet sind, und zumindest das Losrad sowie die zugeordnete Gangkupplung C des der ersten Eingangswelle GE1 zugeordneten und axial benachbart zu dem getriebeseitigen Ende der zweiten Eingangswelle GE2 angeordneten Gangradsatzes R auf der ersten Eingangswelle GE1 angeordnet sind, kann die Koppelvorrichtung nur eine Schaltkupplung S zur unmittelbaren Kopplung der ersten Eingangswelle GE1 mit dem getriebeseitigen Ende der zweiten Eingangswelle GE2 umfassen.

Wenn in dem zugrunde liegenden Doppelkupplungsgetriebe (entsprechend Fig. 10) auch das Losrad und die zugeordnete Gangkupplung D des der ersten Eingangswelle GE1 zugeordneten, axial benachbarten Gangradsatzes G1 auf der ersten Eingangswelle GE1 angeordnet sind, ist die Schaltkupplung S der Koppelvorrichtung zur Vereinfachung der Betätigungsvorrichtung mit der Gangkupplung D dieses verbliebenen Gangradsatzes G1 in einem gemeinsamen Schaltpaket S2a zusammengefasst, über das die erste Eingangswelle GE1 in einer ersten Schaltstellung drehfest mit der zweiten Eingangswelle GE2 gekoppelt ist, in einer Neutralstellung ungekoppelt ist, und in einer zweiten Schaltstellung drehfest mit dem Losrad des verbliebenen Gangradsatzes G1 gekoppelt ist.

Bei den vorgenannten Ausführungsformen des Hybridantriebs kann die erste Eingangswelle jeweils über eine Reibungskupplung K1 mit der Triebwelle des Verbrennungsmotors verbindbar sein.

Es ist jedoch auch möglich, dass die erste Eingangswelle jeweils über eine robustere und kostengünstigere Klauenkupplung mit der Triebwelle des Verbrennungsmotors verbindbar ist, da diese bei geschlossener Schaltkupplung mittels der Elektromaschine synchronisierbar ist.

Die erste Eingangswelle kann jedoch auch unmittelbar drehfest mit der Triebwelle des Verbrennungsmotors verbunden sein, und somit die betreffende Trennkupplung eingespart werden. Hierdurch stehen zwar die der ersten Eingangswelle zugeordneten Gangradsätze (G1, G3, G5; G2, G4) für einen reinen Elektrofahrbetrieb, d.h. einen Antrieb nur über die Elektromaschine, nicht zur Verfügung, aufgrund des gegenüber einem Verbrennungsmotor größeren nutzbaren Drehzahlbereichs einer Elektromaschine stellt dies aber keine wesentliche Betriebseinschränkung dar.

Bei den vorgenannten Ausführungsformen des Hybridantriebs kann die Elektromaschine jeweils koaxial über der ersten Eingangswelle angeordnet sein, und der Rotor der Elektromaschine unmittelbar drehfest mit der zweiten Eingangswelle verbunden sein.

Um eine leistungsschwächere und entsprechend kompaktere sowie leichtere Elektromaschine verwenden zu können, kann jedoch auch vorgesehen sein, dass die Elektromaschine achsparallel benachbart zu der ersten Eingangswelle angeordnet ist, und der Rotor der Elektromaschine über eine Eingangsgetriebestufe KE mit einer Übersetzung i_{KE} größer als eins mit der zweiten Eingangswelle in Triebverbindung steht (i_{KE} > 1,0).

Für denselben Zweck kann auch alternativ vorgesehen sein, dass die Elektromaschine koaxial über der ersten Eingangswelle angeordnet ist, und der Rotor der Elektromaschine über eine als Planetengetriebe ausgebildete Eingangsgetriebestufe KE' mit einer Übersetzung i_{KE}' größer als eins mit der zweiten Eingangswelle GE2 in Triebverbindung steht (i_{KE}' > 1,0).

Zur Verdeutlichung der Erfindung ist der Beschreibung eine Zeichnung mit Ausführungsbeispielen beigefügt. In dieser zeigt
- Fig. 1: einen Hybridantrieb eines Kraftfahrzeugs mit einem Schaltgetriebe, das aus einem Doppelkupplungsgetriebe nach Fig. 10 abgeleitet ist,
- Fig. 2: eine erste Weiterbildung des Hybridantriebs nach Fig. 1,
- Fig. 3: eine zweite Weiterbildung des Hybridantriebs nach Fig. 1, und
- Fig. 10: ein erstes Doppelkupplungsgetriebe

In Fig. 10 ist in schematischer Form ein an sich bekanntes Doppelkupplungsgetriebe 1.0 abgebildet, aus dem ein nachfolgend beschriebenes Schaltgetriebe 1.1 eines Hybridantriebs 6.1 abgeleitet ist. Das Doppelkupplungsgetriebe 1.0 weist zwei koaxiale Eingangswellen GE1, GE2 und eine gemeinsame Ausgangswelle GA auf. Die erste Eingangswelle GE1 ist zentral innerhalb der als Hohlwelle ausgebildeten zweiten Eingangswelle GE2 angeordnet. Beide Eingangswellen GE1, GE2 sind eingangsseitig über jeweils eine zugeordnete Reibungskupplung K1, K2 mit der Triebwelle 4 eines Verbrennungsmotors VM verbindbar. Ausgangsseitig sind beide Eingangswellen GE1, GE2 jeweils über mehrere selektiv schaltbare Gangradsätze R, G1, G3, G5 bzw. G2, G4 mit der Ausgangswelle GA in Triebverbindung bringbar.

Vorliegend sind der ersten Eingangswelle GE1 der Umkehr-Gangradsatz R des Rückwärtsgangs und die Gangradsätze G1, G3, G5 der ungeraden Vorwärtsgänge zugeordnet. Der zweiten Eingangswelle GE2 sind die Gangradsätze G2, G4 der geraden Vorwärtsgänge zugeordnet. Die Losräder und die Gangkupplungen A, B, C, D, E und F der Gangradsätze R, G1, G3, G5 bzw. G2, G4 sind jeweils auf der zugeordneten Eingangswelle GE1, GE2 angeordnet, wogegen die betreffenden Festräder jeweils drehfest auf der Ausgangswelle GA angeordnet sind. Die Gangkupplungen A bis F sind jeweils paarweise in einem gemeinsamen Schaltpaket S1, S2, S3 zusammengefasst. So sind die Gangkupplungen A und B der Gangradsätze G2, G4 des zweiten und des vierten Vorwärtsgangs in einem ersten Schaltpaket S1, die Gangkupplungen C und D des Umkehr-Gangradsatzes R des Rückwärtsgangs und des Gangradsatzes G1 des ersten Vorwärtsgangs in einem zweiten Schaltpaket S2, sowie die Gangkupplungen E und F der Gangradsätze G3, G5 des dritten und des fünften Vorwärtsgangs in einem dritten Schaltpaket S3 angeordnet.

Für das nachfolgend beschriebene Schaltgetriebe 1.1 eines Hybridantriebs 6.1, 6.2, 6.3 gemäß den Figuren 1 bis 3 ist es wichtig festzuhalten, dass der unmittelbar axial benachbart zu dem getriebeseitigen Ende 5 der zweiten Eingangswelle GE2 angeordnete Umkehr-Gangradsatz R und der axial daneben angeordnete Gangradsatz G1 der ersten Eingangswelle GE1 zugeordnet sind, und dass die Losräder 9, 10 sowie die zugeordneten Gangkupplungen C, D dieser Gangradsätze R, G1 auf der ersten Eingangswelle GE1 angeordnet sind.

Ausgehend von dem Doppelkupplungsgetriebe 1.0 nach Fig. 10 ist ein Schaltgetriebe 1.1 eines Hybridantriebs 6.1 gemäß Fig. 1 dadurch geschaffen, dass anstelle des Umkehr-Gangradsatzes R des Rückwärtsgangs und der zugeordneten Gangkupplung C eine Koppelvorrichtung 7.1 vorgesehen ist, mittels der die beiden Eingangswellen GE1, GE2 miteinander in Triebverbindung bringbar sind. Vorliegend umfasst die Koppelvorrichtung 7.1 eine anstelle der Gangkupplung C des Rückwärtsgangs auf der ersten Eingangswelle GE1 angeordnete Schaltkupplung S, mittels der die erste Eingangswelle GE1 unmittelbar mit dem getriebeseitigen Ende 5 der zweiten Eingangswelle GE2 koppelbar ist. Die Schaltkupplung S ist mit der Gangkupplung D des Gangradsatzes G1 des ersten Vorwärtsgangs in einem gemeinsamen Schaltpaket S2a zusammengefasst, über das die erste Eingangswelle GE1 in einer ersten Schaltstellung drehfest mit dem getriebeseitigen Ende 5 der zweiten Eingangswelle GE2 gekoppelt ist, in einer Neutralstellung ungekoppelt ist, und in einer zweiten Schaltstellung drehfest mit dem Losrad 10 des Gangradsatzes G1 des ersten Vorwärtsgangs gekoppelt ist.

In dem Hybridantrieb 6.1 nach Fig. 1 ist die erste Eingangswelle GE1 eingangsseitig über eine erste Reibungskupplung K1 mit der Triebwelle 4 des Verbrennungsmotors VM verbindbar. Die zweite Eingangswelle GE2 ist eingangsseitig unmittelbar drehfest mit dem Rotor 8 einer als Motor und als Generator betreibbaren Elektromaschine EM verbunden, die koaxial über der ersten Eingangswelle GE1 angeordnet ist. In dem Schaltgetriebe 1.1 ist der in dem zugrunde liegenden Doppelkupplungsgetriebe 1.0 vorhandene Umkehr-Gangradsatz R des Rückwärtsgangs vollständig weggelassen, was problemlos möglich ist, da ein Rückwärts-Anfahren und Rückwärts-Rangieren zum Beispiel über den Gangradsatz G2 des zweiten Vorwärtsgangs in Verbindung mit einer Drehrichtungsumkehr der Elektromaschine EM erfolgen kann. Das Schaltgetriebe 1.1 des Hybridantriebs 6.1 nach Fig. 1 ist demnach mit nur geringen Änderungen bauraumneutral und ohne wesentliche Funktionseinschränkungen aus dem Doppelkupplungsgetriebe 1.0 nach Fig. 10 abgeleitet und entsprechend kostengünstig herstellbar.

In Fig. 2 und Fig. 3 abgebildete Weiterbildungen des Hybridantriebs 6.1 nach Fig. 1 weisen beispielhaft Gestaltungsmerkmale auf, die in beliebiger Kombination und unabhängig voneinander in Verbindung mit dem vorliegend beschriebenen Schaltgetriebe 1.1 sowie ähnlich aufgebauten Schaltgetrieben zur Anwendung kommen können.

In der Ausführungsform des Hybridantriebs 6.2 nach Fig. 2 ist die erste Eingangswelle GE1 eingangsseitig über eine unsynchronisierte Klauenkupplung K1' mit der Triebwelle 4 des Verbrennungsmotors VM verbindbar. Eine Ausbildung als Klauenkupplung K1' ist gegenüber einer Reibungskupplung K1 kostengünstiger und deshalb möglich, weil diese bei geschlossener Schaltkupplung S mittels der Elektromaschine EM' synchronisierbar ist. Die Elektromaschine EM' kann, wie in Fig. 2 ebenfalls beispielhaft veranschaulicht ist, auch achsparallel benachbart zu der ersten Eingangswelle GE1 angeordnet sein, und der Rotor 8' der Elektromaschine EM' kann über eine vorliegend als Stirnradpaar ausgebildete Eingangsgetriebestufe KE, die zweckmäßig eine Übersetzung i_{KE} größer als eins aufweist (i_{KE} > 1,0), mit der zweiten Eingangswelle GE2 in Triebverbindung stehen. Hierdurch kann die Elektromaschine EM' leistungsschwächer und entsprechend kompakter sowie leichter ausgebildet sein.

In der Ausführungsform des Hybridantriebs 6.3 nach Fig. 3 ist die erste Eingangswelle GE1 eingangsseitig unmittelbar, d.h. ohne eine Trennkupplung K1, K1', drehfest mit der Triebwelle 4 des Verbrennungsmotors VM verbunden, was eine weitere Vereinfachung und Kosteneinsparung darstellt. Hierdurch stehen zwar die der ersten Eingangswelle GE1 zugeordneten Gangradsätze G1, G3, G5 für einen reinen Elektrofahrbetrieb, d.h. einen Antrieb nur über die Elektromaschine EM", nicht zur Verfügung. Aufgrund des gegenüber einem Verbrennungsmotor VM größeren nutzbaren Drehzahlbereichs einer Elektromaschine EM" stellt dies aber keine wesentliche Betriebseinschränkung dar. Die Elektromaschine EM" kann, wie in Fig. 3 ebenfalls beispielhaft veranschaulicht ist, auch koaxial über der ersten Eingangswelle GE1 angeordnet sein. Zudem kann der Rotor 8" der Elektromaschine EM" über eine als Planetengetriebe ausgebildete Eingangsgetriebestufe KE', die zweckmäßig eine Übersetzung i_{KE}' größer als eins aufweist (i_{KE}' > 1,0), mit der zweiten Eingangswelle GE2 in Triebverbindung stehen. Auch in diesem Fall kann die Elektromaschine EM" leistungsschwächer und entsprechend kompakter sowie leichter ausgebildet sein.

### Bezugszeichen

- 1.0: Doppelkupplungsgetriebe
- 1.1: Schaltgetriebe
- 4: Triebwelle von VM
- 5: Getriebeseitiges Ende von GE2
- 6.1: Hybridantrieb
- 6.2: Hybridantrieb
- 6.3: Hybridantrieb
- 7.1: Koppelvorrichtung
- 8: Rotor von EM
- 8': Rotor von EM'
- 8": Rotor von EM"
- 9: Losrad von R
- 10: Losrad von G1
- A: Gangkupplung von G2 und G3
- B: Gangkupplung von G4 und G7
- C: Gangkupplung von R
- D: Gangkupplung von G1 und G6
- E: Gangkupplung von G3 und G1
- EM: Elektromaschine
- EM': Elektromaschine
- EM": Elektromaschine
- F: Gangkupplung von G1 und G5
- G1 - G5: Gangradsätze der Vorwärtsgänge
- GA: Ausgangswelle
- GE1: Erste Eingangswelle
- GE2: Zweite Eingangswelle
- i_{KE}: Übersetzung von KE
- i_{KE}': Übersetzung von KE'
- K1: Erste Reibungskupplung, Trennkupplung
- K1': Klauenkupplung, Trennkupplung
- K2: Zweite Reibungskupplung
- KE: Eingangsgetriebestufe
- KE': Eingangsgetriebestufe
- R: Umkehr-Gangradsatz des Rückwärtsgangs
- S: Schaltkupplung
- S1 - S3: Schaltpakete
- S2a: Schaltpaket
- VM: Verbrennungsmotor

## Patentansprüche

1. Schaltgetriebe eines Hybridantriebs für ein Kraftfahrzeug, mit zwei Eingangswellen (GE1, GE2) und einer gemeinsamen Ausgangswelle (GA), wobei die erste Eingangswelle (GE1) mit der Triebwelle (4) eines Verbrennungsmotors (VM) verbindbar und über eine erste Gruppe selektiv schaltbarer Gangradsätze (G1, G3, G5; G2, G4) mit der Ausgangswelle (GA) in Triebverbindung bringbar ist, wobei die zweite Eingangswelle (GE2) mit dem Rotor (8, 8', 8") einer als Motor und als Generator betreibbaren Elektromaschine (EM, EM', EM") in Triebverbindung steht und über eine zweite Gruppe selektiv schaltbarer Gangradsätze (G2, G4; G1, G3, G5) mit der Ausgangswelle (GA) in Triebverbindung bringbar ist, wobei beide Eingangswellen (GE1, GE2) über eine schaltbare Koppelvorrichtung (7.1) miteinander in Triebverbindung bringbar sind, und wobei die erste Eingangswelle (GE1) zentral angeordnet ist, die zweite Eingangswelle (GE2) als eine Hohlwelle ausgebildet und koaxial über der ersten Eingangswelle (GE1) angeordnet ist, wobei die Koppelvorrichtung (7.1) eine Schaltkupplung (S) zur unmittelbaren Kopplung der ersten Eingangswelle (GE1) mit dem getriebeseitigen Ende (5) der zweiten Eingangswelle (GE2) umfasst, **dadurch gekennzeichnet, dass** die Schaltkupplung (S) der Koppelvorrichtung (7.1) mit der Gangkupplung (D) des Gangradsatzes (G1) des ersten Vorwärtsgangs in einem gemeinsamen Schaltpaket (S2a) zusammengefasst ist, über das die erste Eingangswelle (GE1) in einer ersten Schaltstellung drehfest mit der zweiten Eingangswelle (GE2) gekoppelt ist, in einer Neutralstellung ungekoppelt ist, und in einer zweiten Schaltstellung drehfest mit dem Losrad des Gangradsatzes (G1) des ersten Vorwärtsgangs gekoppelt ist.

2. Schaltgetriebe nach Anspruch 1, **dadurch gekennzeichnet**, dassein Rückwärts-Anfahren oder Rückwärts-Rangieren über einen Gangradsatz eines Vorwärtsgangs in Verbindung mit einer Drehrichtungsumkehr mittels der Elektromaschine (EM, EM', EM") möglich ist.

3. Schaltgetriebe nach einem der vorherigen Ansprüche, **dadurch gekennzeichnet, dass** die erste Eingangswelle (GE1) über eine Reibungskupplung (K1) mit der Triebwelle (4) des Verbrennungsmotors (VM) verbindbar ist.

4. Schaltgetriebe nach einem der Ansprüche 1 bis 2, **dadurch gekennzeichnet, dass** die erste Eingangswelle (GE1) über eine Klauenkupplung (K1') mit der Triebwelle (4) des Verbrennungsmotors (VM) verbindbar ist.

5. Schaltgetriebe nach einem der Ansprüche 1 bis 2, **dadurch gekennzeichnet, dass** die erste Eingangswelle (GE1) unmittelbar drehfest mit der Triebwelle (4) des Verbrennungsmotors (VM) verbunden ist.

6. Schaltgetriebe nach einem der vorherigen Ansprüche, **dadurch gekennzeichnet, dass** die Elektromaschine (EM) koaxial über der ersten Eingangswelle (GE1) angeordnet ist, und der Rotor (8) der Elektromaschine (EM) unmittelbar drehfest mit der zweiten Eingangswelle (GE2) verbunden ist.

7. Schaltgetriebe nach einem der Ansprüche 1 bis 5, **dadurch gekennzeichnet, dass** die Elektromaschine (EM') achsparallel benachbart zu der ersten Eingangswelle (GE1) angeordnet ist, und der Rotor (8') der Elektromaschine (EM') über eine Eingangsgetriebestufe (KE) mit einer Übersetzung (i_{KE}) größer als eins mit der zweiten Eingangswelle (GE2) in Triebverbindung steht (i_{KE} > 1,0).

8. Schaltgetriebe nach einem der Ansprüche 1 bis 5, **dadurch gekennzeichnet, dass** die Elektromaschine (EM") koaxial über der ersten Eingangswelle (GE1) angeordnet ist, und der Rotor (8") der Elektromaschine (EM") über eine als Planetengetriebe ausgebildete Eingangsgetriebestufe (KE') mit einer Übersetzung (i_{KE}') größer als eins mit der zweiten Eingangswelle (GE2) in Triebverbindung steht (i_{KE}' > 1,0).

## Claims

1. Manual gearbox of a hybrid drive for a motor vehicle, having two input shafts (GE1, GE2) and having a common output shaft (GA), wherein the first input shaft (GE1) is connectable to the driveshaft (4) of an internal combustion engine (VM) and is connectable in terms of drive to the output shaft (GA) by way of a first group of selectively shiftable gearwheel sets (G1, G3, G5; G2, G4), wherein the second input shaft (GE2) is connected in terms of drive to the rotor (8, 8', 8") of an electric machine (EM, EM', EM") which is operable as a motor and as a generator, and said second input shaft is connectable in terms of drive to the output shaft (GA) by way of a second group of selectively shiftable gearwheel sets (G2, G4; G1, G3, G5), wherein the two input shafts (GE1, GE2) are connectable to one another in terms of drive by way of a shiftable coupling device (7.1), and wherein said first input shaft (GE1) is arranged centrally, the second input shaft (GE2) is in the form of a hollow shaft and is arranged coaxially over the first input shaft (GE1), wherein the coupling device (7.1) comprises a shift clutch (S) for the direct coupling of the first input shaft (GE1) to the gearbox-side end (5) of the second input shaft (GE2), **characterized in that** the shift clutch (S) of the coupling device (7.1) is combined with the gearspeed clutch (D) of the gearwheel set (G1) of the first forward gearspeed in a common shift assembly (S2a), by way of which the first input shaft (GE2), in a first shift position, is coupled rotationally conjointly to the second input shaft (GE2), in a neutral position, is uncoupled, and in a second shift position, is coupled rotationally conjointly to the floating gear of the gearwheel set (G1) of the first forward gearspeed.

2. Manual gearbox according to Claim 1, **characterized in that** reverse starting or reverse manoeuvring is possible by way of a gearwheel set of a forward gearspeed in conjunction with a reversal of rotational direction by way of the electric machine (EM, EM', EM").

3. Manual gearbox according to one of the preceding claims, **characterized in that** the first input shaft (GE1) is connectable by way of a friction clutch (K1) to the driveshaft (4) of the internal combustion engine (VM).

4. Manual gearbox according to either of Claims 1 and 2, **characterized in that** the first input shaft (GE1) is connectable by way of a jaw clutch (K1') to the driveshaft (4) of the internal combustion engine (VM).

5. Manual gearbox according to either of Claims 1 and 2, **characterized in that** the first input shaft (GE1) is directly rotationally conjointly connected to the driveshaft (4) of the internal combustion engine (VM).

6. Manual gearbox according to one of the preceding claims, **characterized in that** the electric machine (EM) is arranged coaxially over the first input shaft (GE1), and the rotor (8) of the electric machine (EM) is directly rotationally conjointly connected to the second input shaft (GE2).

7. Manual gearbox according to one of Claims 1 to 5, **characterized in that** the electric machine (EM') is arranged adjacent, in axially parallel fashion, to the first input shaft (GE1), and the rotor (8') of the electric machine (EM') is connected in terms of drive to the second input shaft (GE2) by way of an input gearbox stage (KE) with a transmission ratio (i_{KE}) greater than one (i_{KE} > 1.0).

8. Manual gearbox according to one of Claims 1 to 5, **characterized in that** the electric machine (EM") is arranged coaxially over the first input shaft (GE1), and the rotor (8") of the electric machine (EM") is connected in terms of drive to the second input shaft (GE2) by way of an input gearbox stage (KE') in the form of a planetary gearbox with a transmission ratio (i_{KE}') greater than one (i_{KE}' > 1.0).

## Revendications

1. Transmission à plusieurs rapports pour entraînement hybride de véhicule automobile, présentant des arbres d'entrée (GE1, GE2) et un arbre de sortie (GA) commun,
le premier arbre d'entrée (GE1) pouvant être relié à l'arbre d'entraînement (4) d'un moteur (VM) à combustion interne et pouvant être amené à être relié à entraînement par l'intermédiaire d'un premier groupe de jeux (G1, G3, G5; G2, G4) de roues sélectivement commutables à l'arbre de sortie (GA),
le deuxième arbre d'entrée (GE2) étant en liaison d'entraînement avec le rotor (8, 8', 8") d'une machine électrique (EM, EM', EM") apte à être utilisée comme moteur et comme génératrice et pouvant être amené à être relié à entraînement par l'intermédiaire d'un deuxième groupe de jeux de roues (G2, G4; G1, G3, G5) commutables sélectivement à l'arbre de sortie (GA),
les deux arbres d'entrée (GE1, GE2) pouvant être amenés en liaison d'entraînement mutuel par l'intermédiaire d'un ensemble commutable d'accouplement (7.1),
le premier arbre d'entrée (GE1) étant disposé centralement, le deuxième arbre d'entrée (GE2) étant configuré comme arbre creux et disposé coaxialement au-dessus du premier arbre d'entrée (GE1),
l'ensemble d'accouplement (7.1) comprenant un accouplement commutable (S) permettant l'accouplement direct du premier arbre d'entrée (GE1) à l'extrémité (5) située côté entraînement du deuxième arbre d'entrée (GE2),
**caractérisée en ce que**
l'accouplement commutable (S) de l'ensemble d'accouplement (7.1) est combiné en un paquet commun de commutation (S2a) avec l'accouplement (D) du jeu de roues (G1) du premier rapport avant par l'intermédiaire duquel le premier arbre d'entrée (GE1) est accouplé à rotation solidaire au deuxième arbre d'entrée (GE2) dans une première position de commutation, est désaccouplé dans une position neutre et est accouplé à rotation solidaire à la roue libre du jeu (G1) de roues du premier rapport avant dans une deuxième position de commutation.

2. Transmission à plusieurs rapports selon la revendication 1, **caractérisée en ce qu'**un démarrage en arrière ou une manoeuvre de stationnement vers l'arrière sont permis par l'intermédiaire d'un jeu de roues d'un rapport avant en association avec l'inversion du sens de rotation au moyen de la machine électrique (EM, EM', EM").

3. Transmission à plusieurs rapports selon l'une des revendications précédentes, **caractérisée en ce que** le premier arbre d'entrée (GE1) peut être relié à l'arbre (4) entraîné par le moteur (VM) à combustion interne par l'intermédiaire d'un embrayage (K1) à frottement.

4. Transmission à plusieurs rapports selon l'une des revendications 1 et 2, **caractérisée en ce que** le premier arbre d'entrée (GE1) peut être relié à l'arbre (4) entraîné par le moteur (VM) à combustion interne par l'intermédiaire d'un accouplement (K1') à griffes.

5. Transmission à plusieurs rapports selon l'une des revendications 1 et 2, **caractérisée en ce que** le premier arbre d'entrée (GE1) est relié directement à rotation solidaire à l'arbre (4) entraîné par un moteur (VM) à combustion interne.

6. Transmission à plusieurs rapports selon l'une des revendications précédentes, **caractérisée en ce que** la machine électrique (EM) est disposée coaxialement au-dessus du premier arbre d'entrée (GE1) et **en ce que** le rotor (8) de la machine électrique (EM) est relié directement à rotation solidaire au deuxième arbre d'entrée (GE2).

7. Transmission à plusieurs rapports selon l'une des revendications 1 à 5, **caractérisée en ce que** la machine électrique (EM') est disposée à axes parallèles au voisinage du premier arbre d'entrée (GE1) et **en ce que** le rotor (8') de la machine électrique (EM') est en liaison d'entraînement avec le deuxième arbre d'entrée (GE2) par l'intermédiaire d'un étage (KE) de transmission d'entrée dont le rapport de transmission (i_{KE}) est supérieur à un (1_{KE} > 1,0).

8. Transmission à plusieurs rapports selon l'une des revendications 1 à 5, **caractérisée en ce que** la machine électrique (EM") est disposée coaxialement au-dessus du premier arbre d'entrée (GE1) et **en ce que** le rotor (8") de la machine électrique (EM") est en liaison d'entraînement avec le deuxième arbre d'entrée (GE2) par l'intermédiaire d'un étage (KE') de transmission d'entrée configuré comme embrayage à planétaires dont le rapport de transmission (i_{KE}') est supérieur à un (i_{KE}' > 1,0).
